# EUROPEAN PATENT APPLICATION

(11) **EP 2 023 594 A1**
(43) Date of publication of application: **11.02.2009**
(21) Application number: 08161660.9
(22) Date of filing: 01.08.2008
(51) Int. Cl.: H04N 1/32, H04N 101/00

(54) **Image inputting apparatus, image inputting program product, camera, and image processing system**

(30) Priority: 03.08.2007 JP 2007202561
(71) Applicant: Nikon Corporation, Tokyo 100-8331 (JP)
(72) Inventor: Hayashi, Nobuhiro, Headquarter, 2-3 Marunouchi 3-chome Chiyoda-ku 100-8331 (JP); Kuwata, Hiromi, Headquarter, 2-3 Marunouchi 3-chome Chiyoda-ku 100-8331 (JP); Akiya, Hiroyuki, Headquarter, 2-3 Marunouchi 3-chome Chiyoda-ku 100-8331 (JP); Teramoto, Shutaro, Headquarter, 2-3 Marunouchi 3-chome Chiyoda-ku 100-8331 (JP); Jinnouchi, Kazuhira, Headquarter, 2-3 Marunouchi 3-chome Chiyoda-ku 100-8331 (JP)
(74) Representative: Walaski, Jan Filip

(57) **Abstract**

An image inputting apparatus includes: an input means for inputting an original image file including at least an image data region in which image data is stored and an appended information region; a decision means for deciding whether or not falsification of the original image file is prohibited, based upon the appended information; a file modification means for modifying the original image file to create a new image file in which the appended information region is expanded; and a store control means for disallowing the file modification means to create the new image file and storing the original image file just as it is if the decision means has decided that falsification of the inputted original image file is prohibited, and that for making the file modification means create the new image file and storing the new image file if the decision means has decided that falsification of the inputted original image file is not prohibited.

## Description

The disclosure of the following priority application is herein incorporated by reference:
Japanese Patent Application No. 2007-202561 filed August 3, 2007

The present invention relates to a device, a program product, and an image processing system for inputting an image from a digital camera or the like, and a camera.

In Japanese Laid-Open Patent Publication 2003-173625, there is disclosed the concept of, when creating a media file that includes media data including images and sound and also meta data followed by the media data, inserting free data that is followed by the media data and is following the meta data. During file conversion, the file conversion is performed without any shifting of the media data, by overwriting the meta data and the free data with new meta data before conversion.

However, the file into which the free data is inserted is different from the original file. Accordingly, a problem occurs, if serious emphasis is tobeplacedupon the originality of the file even if no modification is made to the media data.

An image inputting apparatus according to the first aspect of the present invention comprises: an input means for inputting from externally an original image file including at least an image data region in which image data is stored, and an appended information region in which appended information related to the image data is stored; a decision means for deciding whether or not falsification of the original image file is prohibited, based upon the appended information; a file modification means for modifying the original image file to create a new image file in which the appended information region is expanded; and a store control means for disallowing the file modification means to modify the original image file to create the new image file and storing the original image file just as it is if the decision means has decided that falsificationof the inputted original image file is prohibited, and for making the file modification means modify the original image file to create the new image file and storing the new image file if the decisionmeans has decided that falsification of the inputted original image file is not prohibited.

In the second aspect of the present invention, the image inputting apparatus according to the first aspect is preferably configured such that the decision means for deciding decides whether or not prohibition information indicating that falsification of the original image file is prohibited is present in the original image file.

In the third and fourth aspects of the present invention, a computer-readable computer programproduct contains an image inputting program that causes the image inputting device to perform instructions according to the first and the second aspects of the invention.

An image processing system according to the fifth aspect of the present invention comprises: a determination means for determining whether or not it is allowed to set prohibition information indicating that falsification of an original image file is prohibited to the original image file including at least an image data region in which image data is stored and an appended information region in which appended information related to the image data is stored; a prohibition information setting means for setting the prohibition information to the original image file, according to the determination by the determinationmeans; an input means for inputting the original image file; a decision means for deciding whether or not the prohibition information is set to the original image file, based upon the appended information; a file modification means for modifying the original image file to create a new image file in which the appended information region is expanded; and a store control means for disallowing the file modification means to modify the original image file to create the new image file and storing the original image file just as it is if the decision has been made that the prohibition information is set by the decision means, and for making the file modification means modify the original image file to create the new image file and storing the new image file if the decision has been made that the prohibition information is not set by the decision means.

In the sixth aspect of the present invention, the image processing system according to the fifth aspect is preferably configured to comprise at least a camera, and the camera includes the determination means and the prohibition information setting means.

A camera according to the seventh aspect of the present invention comprises: an output means for outputting to externally an image file that includes at least an image data region inwhich image data is stored and an appended information region in which appended information related to the image data is stored; a determination means for determining whether or not it is allowed to set prohibition information indicating that prohibits falsification of an original image file is prohibited; and a prohibition information setting means for setting the prohibition information to the image file, according to determination by the determination means.

### BRIEF DESCRIPTION OF THE DRAWINGS

Fig. 1 is a structural diagram of a system that includes a computer and a digital camera;
Fig. 2 is a control block diagram of the camera;
Fig. 3 is a figure for explanation of a structure of an image file;
Fig. 4 is a figure for explanation of processing for ensuring an appended information region in the image file;
Fig. 5 is a figure showing a situation in which appended information is added into an appended information region that has been ensured;
Fig. 6 is a figure showing an example of a setting screen for an image genuineness verification function;
Fig. 7 is a flow chart showing control steps executed by the digital camera during photography;
Fig. 8 is a flow chart showing a control method executed by the computer during image input; and
Fig. 9 is a figure for explanation of the overall structure of an apparatus that is used for supplying a program product.

### DESCRIPTION OF THE PREFERRED EMBODIMENT

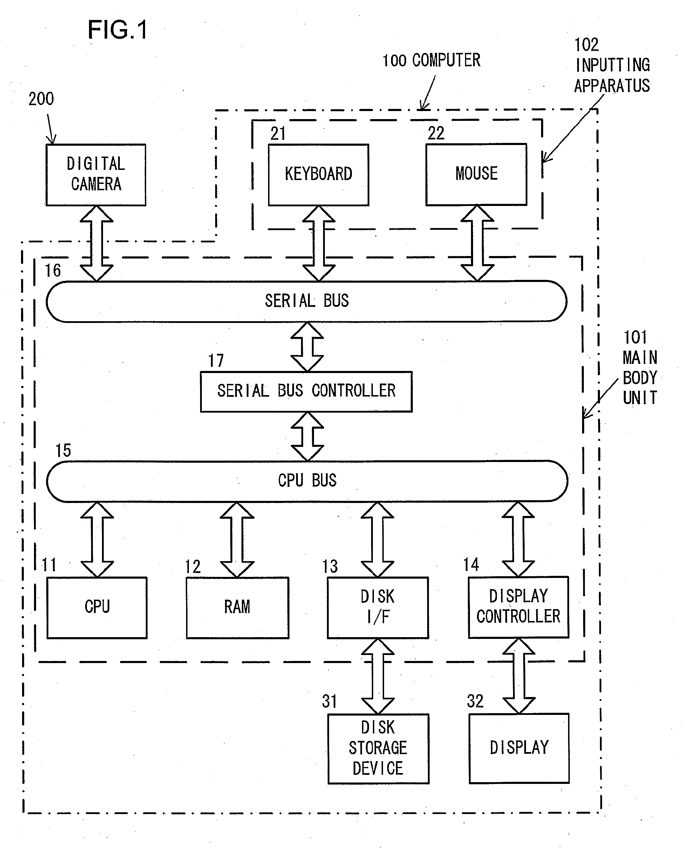

An embodiment of the present invention will now be explained with reference to Figs 1 through 8.

Fig. 1 is a structural diagram of a system that includes a computer and a digital camera. The computer 100 includes a main body unit 101, an inputting apparatus 102, a disk storage device 31 (for example a hard disk), and a display 32 that serves as a display device. The main body unit 101 includes a CPU 11, a RAM 12, a disk interface 13, a display controller 14, a CPU bus 15, a serial bus 16, a serial bus controller 17, and the like. The inputting apparatus 102 includes a keyboard 21 and a mouse 22 and so on, which are connected via the serial bus 16. The disk storage device 31 is connected to the main body unit 101 via the disk interface 13.

The digital camera 200 (hereinafter termed a camera) is connected to the computer 100 via the serial bus 16. The CPU 11 of the computer 100 controls the camera 200 according to software for camera control that is stored in the disk storage device 31. In concrete terms, for example, based upon commands that the user has inputted with the keyboard 21 or the mouse 22, photographic commands are transmitted to the camera 200, and image files sent from the camera 200 are processed according to requirements and stored in the storage device 31.

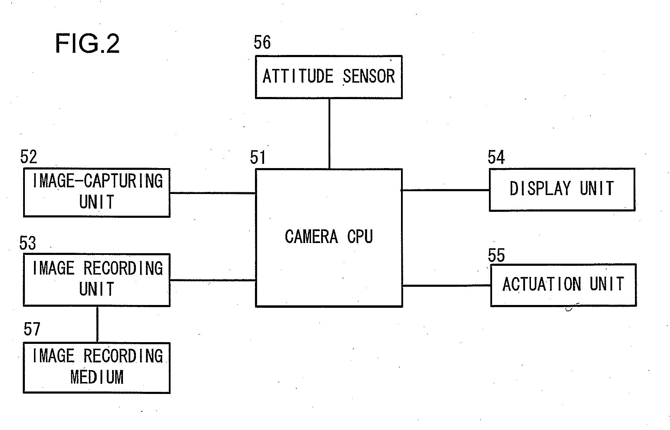

Fig. 2 is a block diagram showing the control system of the camera 200. An image-capturing unit 52, an image recording unit 53, a display unit 54, an actuation unit 55, an attitude sensor 56, and the like are connected to the CPU 51 of the camera. The image-capturing unit 52 includes an image sensor that receives light fluxes passed through a photographic lens (not shown in the figures) and performs photoelectric conversion thereupon, an image processing circuit that performs various types of processing upon the photoelectric conversion output of the image sensor and creates image data, and the like. The CPU 51 of the camera records the created image data as an image file that can be handled by the computer 100 upon a recording medium 57 via the image recording unit 53.

The display unit 54 includes a display device such as a liquid crystal monitor or the like that can display images and menu screens and so on, and a drive circuit therefor. The actuation unit 55 includes various types of actuation members such as, for example, a release button, and various switches that are operated upon actuation of those members.

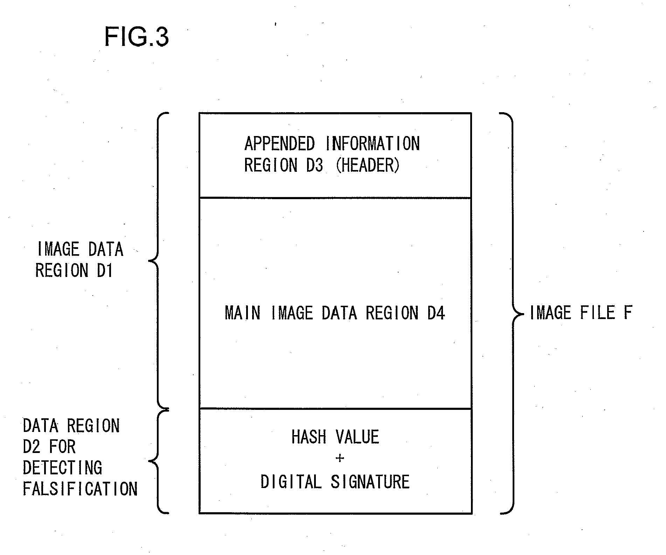

Fig. 3 shows the structure of an image file F that is created by the camera 200. This image file F includes an image data region D1 and a data region D2 for detection of falsification. The image data region D1 includes a main body image data region D4 in which main image data that constitutes the image itself is stored, and an appended information region D3 inwhich appended information related to the image is stored.

This appended information is made up of character information that is described in a predetermined format, and includes data that is generally termedmeta data. The appended information in an image file F includes, for example, the name of the photographer, the place of photography, copyright information, and so on. The appended information region D3 in which the appended information is described is a header region of the file, and is followed by a binary region in the image data region D1. During photography, the CPU 51 of the camera writes various items of information as appended information into this appended information region D3. The size of the appended information region D3 at this time depends upon the amount of information that is thus written thereinto. Moreover, after the image file F has been transferred from the camera 200 to an external device (for example a computer 100), appended information may also be appended into the appended information region D3 using predetermined software.

In this embodiment, when reading in an image file F from the image recording medium 57 within the camera, a predetermined size of an appended information region D3 is ensured in the image file F in advance, in order to allow for increasing the speed of processing for subsequently adding to the appended information in the image file F; In other words, a new image file in which the appended information region D3 within the image file F is expanded is created by the computer 100.

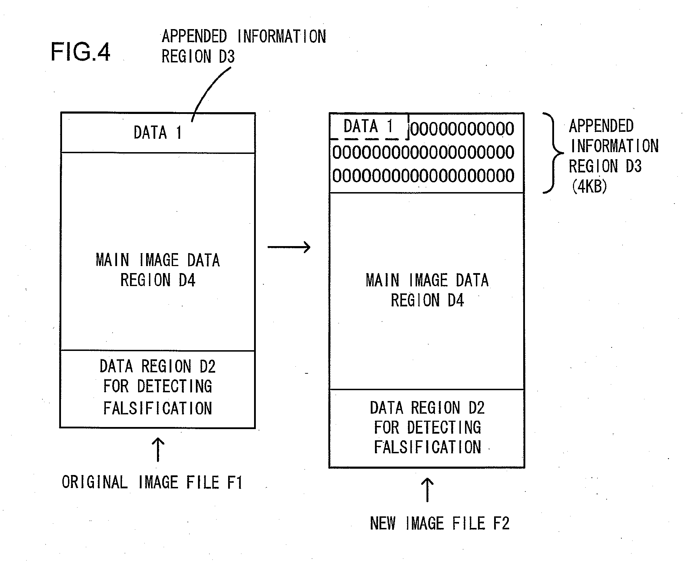

This will now be explained in concrete terms using Fig. 4. It should be understood that, for the convenience of explanation, the image file F that has been created by the camera will be termed the original image file F1. Moreover, the image file in which the appended information region D3 in the original image file F1 has been increased in size by the computer 100 will be termed the new image file F2.

Upon a command for image transfer, the CPU 11 that is installed in the computer 100 executes the software for camera control, and reads the main image data that is stored in the main image data region D4 of the original image file F1, and the appended information that is stored in the appended information region D3 from the recordingmedium 57 of the camera into the RAM 12. If the appended information region D3 does not fill up a region of the predetermined size, the CPU 11 builds up the appended information region D3 to the predetermined size by writing, for example, the sequence of "0"s that is following the appended information in the RAM 12. In other words, the CPU 11 modifies the appended information region D3. And the CPU 11 creates a new image file F2 in which a main image data region D2 is disposed so as to following this modified appended information region D3, and stores it upon the disk storage device 31. Accordingly, this new image file F2 contains at least a main image data region D4 in which the main image data is stored, and this appended information region D3 in which the appended information is stored and that has also been increased in size.

Generally it is considered that, even if data is subsequently added to the appended information, it does not usually exceed 4 kilobytes in size. Accordingly it will be supposed that, in this embodiment, the CPU 11 ensures an appended information region D3 of 4 kilobytes in size including the data originally written therein (i.e. the data written by the camera). If the amount of information written by the camera is large, it is desirable for the region that is ensured to be increased in correspondence thereto. Furthermore, it would also be acceptable to arrange for it to be possible for the user to set the size of the appended information region that is to be ensured.

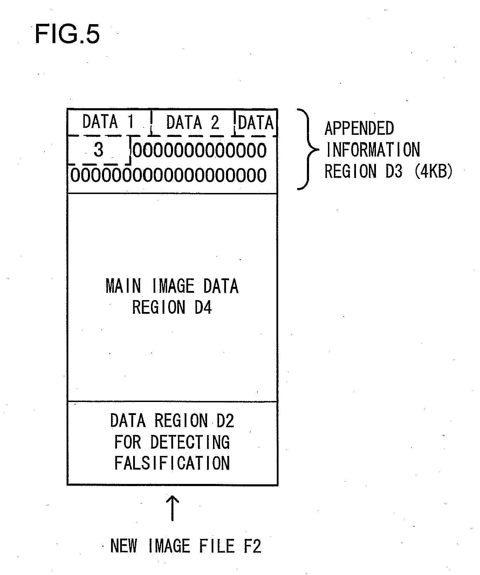

By ensuring the appended information region D3 of a size that is determined in advance in the new image file F2 as described above, when subsequently rewriting and modifying the data in the appended information region D3, as for example shown in Fig. 5, it will be sufficient merely to rewrite the sequence of "0"s as the data to be additionally written (i.e. as the data items 2, 3) . In other words, it becomes unnecessary to shift the binary region in the image data region D1. Accordingly, it is possible to perform the processing for additional writing of data in an extremely short time period.

Next, the detection of falsification of the original image file F1 will be explained.

Data for verifying the originality of the image is stored in the data region D2 for falsification detection included in the original image file F1 (see Fig. 3) . This data consists of data in which a digital signature is appended to a hash value of the image data. As is per se known, the hash value is a summary value that is obtained from the input data by performing processing according to a hash function. The camera 200 may include any one of a plurality of algorithms for hash functions, and may create a hash value by using the image data in the above described image data region D1as an input data.

Since it is difficult from the point of view of computational complexity to create two different sets of input data that have the same hash value, in practice it may be considered that sets of input data for which the hash value is the same are also the same. On the other hand, since if even only a portion of the input data changes the hash value also becomes a different value, it is possible to detect whether or not falsification has been performed, by comparing together the hash values. In other words, the hash value obtained from the image file F that it is desired to verify, and the hash value with the above described digital signature appended are compared together, and if they agree with one another then it may be decided that falsification has not been performed (they are original). On the other hand, if they do not agree with one another, it may be decided that one or the other, or both, of the main image data and the appended information has been falsified.

The problem is that the above described processing by the CPU 11 of the computer 100 to create the new image file F2 is considered to falsification of the image data. The hash value of the image data after the processing to ensure the appended information region D3 has been performed is different from the hash value before processing, in other words is different from the hash value used as data for detection of falsification that is recorded in the original image file F1. Due to this, it is not possible to verify the originality of the new image file F2; for example, it becomes impossible to use this file F2 in an application that requires originality, such as, for example, as a photograph that is to be used as testimony.

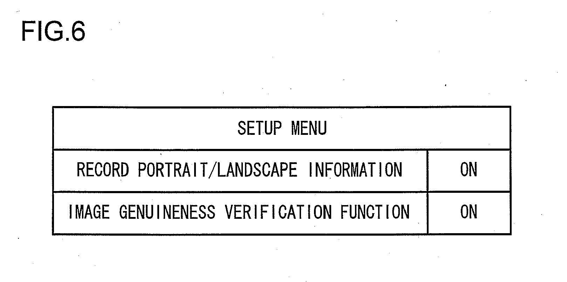

In order to prevent this type of inconvenience, in this embodiment, the camera 200 is endowed with a mode that prohibi ts falsification of the original image file F1. In this made, an "image genuineness verification function" is provided, and the user is able to set or to cancel this function by a menu setting on the camera 200. Fig. 6 shows an example of this function setting screen: to make this function effective, the item "image genuineness verification function" is set to ON, while this item is set to OFF to make it ineffective. This setting is preserved even when the user turns the power supply to the camera OFF (provided that the user does not change it). Or, it would also be acceptable to arrange to reset this setting to either ON or OFF, each time the power supply to the camera is turned ON.

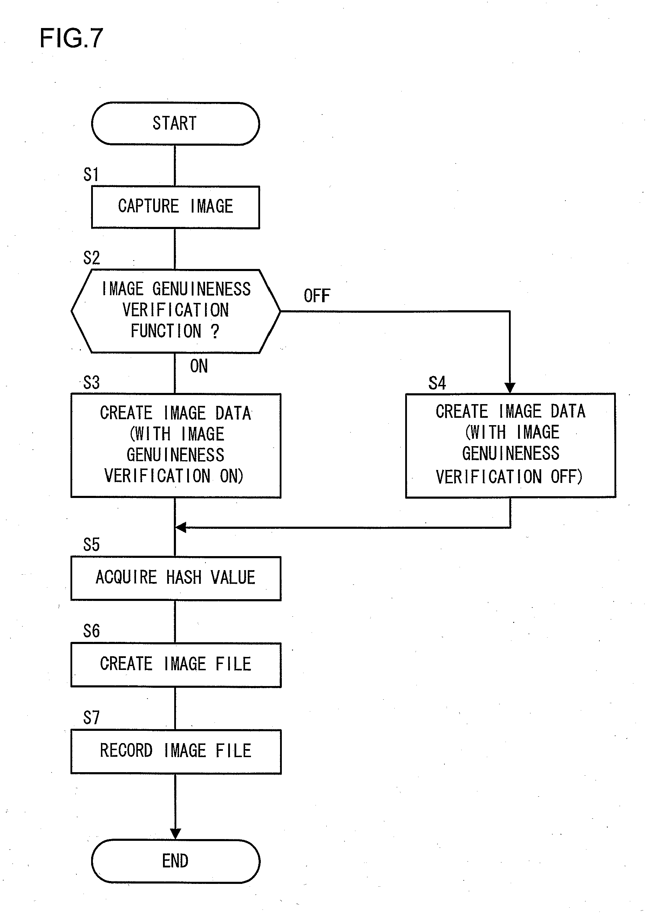

Fig. 7 is a flow chart showing operational steps executed by the digital camera 200 during photography.

When the release button included in the actuation unit 55 is actuated, this program is started by the CPU 51 of the camera, and first, in a step S1 image capture is performed, and the main image data is obtained.

In a step S2, a decision is made as to whether the "image genuineness verification function" is ON or OFF. If it is ON, in a step S3 the main image data and the appended information are combined together and image data is created. In this case, the item "verifying image genuineness" included in the appended information is set to ON so as to prohibit falsification of the image data. On the other hand, if it is decided in the step S2 that the image genuineness verification function is OFF, in a step S4 the image data is created. In this case, the item "verifying image genuineness" is set to OFF so as to permit falsification of the image data.

In a step S5, a hash value of the image data created in the step S3 or S4 is created using a hash function algorithm. In a step S6 a digital signature is appended to this hash value that has been created, and a new image file F2 is created in which this hash value with digital signature appended (that is equivalent to the above described data for detection of falsification) is combined with the image data described above. It should be understood that it is arranged to append this digital signature automatically based upon signature information that the user has inputted in advance. In a step S7 this new image file F2 that has been created is recorded upon the recording medium 57, and then this processing terminates.

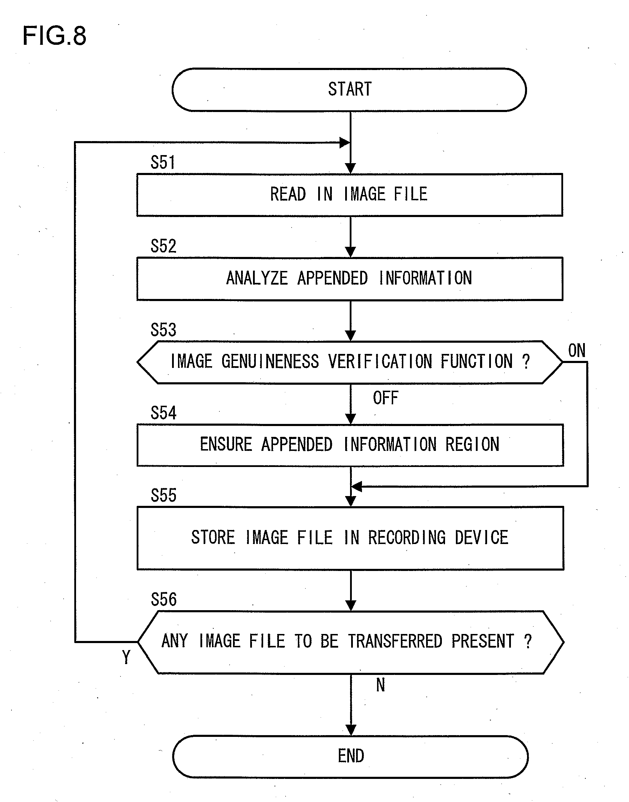

As described above, during the transfer to the computer 100 of the original image file F1 that has been created and recorded by the camera 200, software for camera control that has been installed upon the computer 100 is used. Fig. 8 shows an example of this control step.

Referring to Fig. 8, first in the step S51 the original image file F1 is read in from the camera 200, and then in a step S52 the appended information is analyzed. In a step S53 a decision is made as to whether or not the item "image genuineness verification function" in the appended information is ON. If it is ON, the flowof control is transferred to a step S55 and the original image file F1 is stored just as it is upon the storage device 31. In other words, if information that specifies the prohibition of falsification is set in the original image file F1, processing to ensure the appended information region D3 within the original file F1 is prohibited or disallowed, so that the original image file F1 is stored in its original form just as it is. Accordingly, it is possible subsequently to verify the originality of the original image file F1, and it can be used in an application in which originality is required.

On the other hand, if the item "image genuineness verification function" is OFF, in order to enhance the convenience of appending appended information, in a step S54 an appended information region D3 of a size that is determined in advance is expanded within the original image file F1, and processing is performed to create a new image file F2. The details of this processing are as described above. Next the flow of control proceeds to the step S55, and the new image file F2 after processing is stored in the storage device 31.

And, in a step S56, a decision is made as to whether or not any original image file F1 that must be transferred is still present. If an original image file F1 to be transmitted is still present, the flow of control returns to the step S51. If no file to be transmitted is present, this processing terminates.

According to the embodiment explained above, the following beneficial operational effects are obtained.
(1) It is arranged that if the CPU 11 of the computer 100 has decided that falsification of the original image file F1 that has been inputted is permitted, the CPU 11 modifies the original image file F1 to create a new image file F2 in which an appended information region D3 followed by the main image data region D4 of the original image file F1 is expanded, and to store it in the storage device 31. Furthermore, it is arranged for the CPU 11 to analyze the appended information in the original image file F1, and to store the original image file F1 just as it is in the storage device 31 if falsification of the original image file F1 is prohibited. Accordingly, when it is desired to place great emphasis upon the originality of the inputted image, since the appended information region D3 is not expanded undesirably, the original image file F1 is prevented from being falsified.
(2) When an appended information region D3 is already present in the original image file F1 that has been inputted, it is arranged for the CPU 11 of the computer 100 to increase the size of this appended information region D3 to the predetermined size. This appended information region D3 is located at the head end of the file. Accordingly, if for example the computer 100 appends the appended information to the original image file F1 and makes the size of this appended information region D3 increased, it would be necessary to shift the binary region of the image data D1 following the appended information region D3 rearwards. In other words it would be necessary to rewrite the file. The larger is the size of the original image file F1, the longer is the time period that rewriting this file would take. In particular, a correspondingly long time period would be required for rewriting of an image file whose size is expanded due to enhancement of its image quality. However, according to this embodiment, by creating a new image file F2 inwhich the appended information region D3 is extended to the size that is determined in advance, when subsequently writing further data into this appended information region D3, the requirement to shift the binary region of the image data region D1 rearwards is eliminated. Accordingly, it is possible to perform processing for writing additional data in an extremely short time period.

It should be understood that the computer 100 is not limited to being a personal computer; any device that is capable of inputting an image file would be acceptable. Moreover, it would also be possible to apply the present invention to the case of inputting an image file from some device other than a camera.

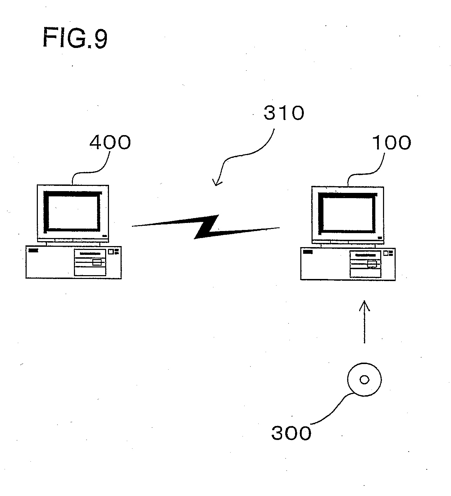

The program related to the control described above could also be supplied via a recording medium such as a CD-ROM or the like, or via a data signal such as the internet or the like. Fig. 9 is a figure showing such a situation. A computer 100 receives supply of the program via a CD-ROM 300. Moreover, the computer 100 is endowed with a function of connection to a communication circuit 310. A computer 400 is a server computer that supplies the above described program, and stores the program upon a recording medium such as a hard disk or the like. The communication circuit 310 is a communication circuit such as the internet or a personal computer communication circuit or the like, or may be a dedicated communication circuit or the like. The computer 400 reads out the program using its hard disk, and transmits the program to the computer 100 via the communication circuit 310. In other words, the program is conveyed by a carrier wave as a data signal, and is thus transmittedvia the communication circuit 310. In this manner, the program may be supplied as a computer program product that can be read in by a computer, in various different formats such as a recording medium or a carrier wave or the like.

The above described embodiments are examples, and various modifications can be made without departing from the scope of the invention.

## Claims

1. An image inputting apparatus, comprising:
an input means for inputting from externally an original image file including at least an image data region in which image data is stored, and an appended information region in which appended information related to the image data is stored;
a decision means for deciding whether or not falsification of the original image file is prohibited, based upon the appended information;
a file modification means for modifying the original image file to create a new image file in which the appended information region is expanded; and
a store control means for disallowing the file modification means to modify the original image file to create the new image file and storing the original image file just as it is if the decision means has decided that falsification of the inputted original image file is prohibited, and for making the file modification means modify the original image file to create the new image file and storing the new image file if the decision means has decided that falsification of the inputted original image file is not prohibited.

2. An image inputting apparatus according to Claim 1, wherein:
the decision means decides whether or not prohibition information indicating that falsification of the original image file is prohibited is present in the original image file.

3. A computer-readable computer program product that contains an image inputting program that is executed by a computer, the image inputting program comprising:
an input instruction for inputting an original image file including at least an image data region in which image data is stored, and an appended information region in which appended information related to the image data is stored from externally;
a decision instruction for deciding whether or not falsification of the original image file is prohibited, based upon the appended information;
a file modification instruction for modifying the original image file to create a new image file in which the appended information region is expanded; and
a store control instruction for disallowing to modify the original image file to create the new image file and storing the original image file just as it is if it has been decided that falsification of the inputted original image file is prohibited, andstoringthenewimagefileif it has been decided that the falsification is not prohibited.

4. A computer-readable computer program product according to Claim 3, wherein:
in the decision instruction, it is decided whether or not prohibition information indicating that falsification of the original image file that has been inputted is prohibited is present in the original image file.

5. An image processing system, comprising:
a determination means for determining whether or not it is allowed to set prohibition information indicating that falsification of an original image file is prohibited to the original image file including at least an image data region inwhich image data is stored and an appended information region in which appended information related to the image data is stored;
a prohibition information setting means for setting the prohibition information to the original image file, according to the determination by the determination means;
an input means for inputting the original image file;
a decision means for deciding whether or not the prohibition information is set to the original image file, based upon the appended information;
a file modification means for modifying the original image file to create a new image file in which the appended information region is expanded; and
a store control means for disallowing the file modification means to modify the original image file to create the new image file and storing the original image file just as it is if the decision has been made that the prohibition information is set by the decision means, and for making the file modification means modify the original image file to create the new image file and storing the new image file if the decision has been made that the prohibition information is not set by the decision means.

6. An image processing system according to Claim 5, comprising at least a camera, and wherein:
the camera includes the determination means and the prohibition information setting means.

7. A camera, comprising:
an output means for outputting to externally an image file that includes at least an image data region in which image data is stored and an appended information region in which appended information related to the image data is stored;
a determination means for determining whether or not it is allowed to set prohibition information indicating that prohibits falsification of an original image file is prohibited; and
a prohibition information setting means for setting the prohibition information to the image file, according to determination by the determination means.
